# EUROPÄISCHE PATENTSCHRIFT

(11) **EP 2 494 669 B1**
(45) Veröffentlichungstag und Bekanntmachung des Hinweises auf die Patenterteilung: **16.03.2016**
(21) Anmeldenummer: 10751604.9
(22) Anmeldetag: 30.08.2010
(51) Int. Cl.: H02H 11/00, B23Q 11/00, B23Q 5/10, B25F 5/00

(54) **ELEKTROWERKZEUGMASCHINE MIT EINER ANLAUFSPERRE**
ELECTRIC MACHINE TOOL COMPRISING A STARTING INHIBITOR
MACHINE-OUTIL ÉLECTRIQUE À VERROUILLAGE DU DÉMARRAGE

(30) Priorität: 28.10.2009 DE 102009046116
(43) Veröffentlichungstag der Anmeldung: 05.09.2012
(73) Patentinhaber: Robert Bosch GmbH, 70442 Stuttgart (DE)
(72) Erfinder: WIRNITZER, Bernd, 71292 Friolzheim (DE)
(86) Internationale Anmeldenummer: PCT/EP2010/062603
(87) Internationale Veröffentlichungsnummer: WO 2011/051016

(56) Entgegenhaltungen:
- EP-A2- 0 141 166
- DE-A1- 10 360 165
- DE-A1-102007 027 898
- US-A1- 2002 117 902

## Beschreibung

### Stand der Technik

Die vorliegende Erfindung betrifft eine Elektrowerkzeugmaschine mit einer Elektronikeinheit zur Realisierung einer Anlaufsperre, wobei die Elektrowerkzeugmaschine mit einer zugeordneten Energiequelle elektrisch leitend verbindbar ist.

Aus DE 103 60 165 A1 sind Elektrowerkzeugmaschinen bekannt, die mit einer zugeordneten Energiequelle elektrisch leitend verbindbar sind und einen Ein-/Aus-Schalter aufweisen, der nach Herstellung einer derartigen elektrisch leitenden Verbindung zum Ein- und Ausschalten der Werkzeugmaschine zwischen einer Ein- und einer Aus-Position umschaltbar ist. Die Energiequelle kann beispielsweise ein zugeordnetes Akkupack sein, oder ein Spannungsnetz, das über einen zugeordneten Netzstecker mit der Elektrowerkzeugmaschine verbindbar ist.

Um nach einer Unterbrechung der elektrisch leitenden Verbindung, z. B. infolge eines unbeabsichtigten Ziehens des Netzsteckers, ein selbstständiges Wiederanlaufen der Werkzeugmaschine zu verhindern, falls deren Schalter sich noch in seiner Ein-Position befindet, kann die Elektrowerkzeugmaschine eine Wiederanlaufsperre aufweisen. Diese wird üblicherweise mit einer Überwachungseinheit realisiert, die dazu dient, eine von der Energiequelle bereitgestellte Betriebsspannung und eine Schalterstellung des Ein-/Aus-Schalters zu überwachen und bei einer Detektion der Betriebsspannung nach einer Unterbrechung der elektrisch leitenden Verbindung ein Anlaufen der Werkzeugmaschine zu verhindern, falls der Ein-/Aus-Schalter sich noch in seiner Ein-Position befindet.

Nachteilig am Stand der Technik ist, dass eine derartige Wiederanlaufsperre kontinuierlich elektrisch leitend mit der zugeordneten Energiequelle verbunden ist, um die Detektion der Betriebsspannung zu ermöglichen, und somit auch im Ruhezustand der Werkzeugmaschine einen entsprechenden Stromverbrauch aufweist. Dies kann insbesondere bei einer Verwendung eines Akkupacks als Energiequelle für die Elektrowerkzeugmaschine zu einer schleichenden Entladung bis hin zu einer Tiefentladung des Akkupacks führen.

### Offenbarung der Erfindung

Eine Aufgabe der Erfindung ist es daher, eine neue Elektrowerkzeugmaschine mit einer Anlaufsperre bereit zu stellen, bei der eine schleichende Entladung eines zugeordneten Akkupacks durch die Anlaufsperre verhindert wird.

Dieses Problem wird gelöst durch eine Elektrowerkzeugmaschine mit den Merkmalen des Anspruchs 1.

Die Erfindung ermöglicht somit, den Energieverbrauch der Elektronikeinheit zur Realisierung der Anlaufsperre zu minimieren.

Die Elektrowerkzeugmaschine weist bevorzugt einen zwischen einer Ein- und einer Aus-Position umschaltbaren Schalter zum Ein- und Ausschalten der Elektrowerkzeugmaschine auf. Die Elektronikeinheit ist bevorzugt dazu ausgebildet, bei der Herstellung der elektrisch leitenden Verbindung zwischen der Elektrowerkzeugmaschine und der Energiequelle ein Anlaufen der Elektrowerkzeugmaschine zu verhindern, falls der Schalter sich in der Ein-Position befindet.

Somit kann ein ungewünschtes Anlaufen der Elektrowerkzeugmaschine sicher und zuverlässig verhindert werden.

Gemäß einer Ausführungsform weist die Elektronikeinheit eine Erfassungseinheit auf, die dazu ausgebildet ist, bei der Herstellung der elektrisch leitenden Verbindung zwischen der Elektrowerkzeugmaschine und der Energiequelle eine Beaufschlagung der Elektrowerkzeugmaschine mit einer von der Energiequelle bereitgestellten Betriebsspannung zu detektieren.

Die Erfindung ermöglicht somit, eine Beaufschlagung der Elektrowerkzeugmaschine mit einer von der Energiequelle bereitgestellten Betriebsspannung mit kostengünstigen Bauelementen zu detektieren.

Die Erfassungseinheit ist bevorzugt dazu ausgebildet, bei der Beaufschlagung der Elektrowerkzeugmaschine mit der von der Energiequelle bereitgestellten Betriebsspannung ein temporäres Indikatorsignal auszugeben, das die Beaufschlagung der Elektrowerkzeugmaschine mit der Betriebsspannung anzeigt. Das Indikatorsignal ist bevorzugt durch Erzeugen eines Spannungssignals, eines Stromsignals oder eines vorgegebenen Zustands in einem nichtflüchtigen Speichermedium realisierbar.

Somit kann eine Anzeige der Beaufschlagung der Elektrowerkzeugmaschine mit der Betriebsspannung auf einfache Art und Weise realisiert werden.

Die Elektronikeinheit weist bevorzugt eine Auswerteeinheit auf, die dazu ausgebildet ist, in Abhängigkeit von dem Indikatorsignal ein Anlaufen der Elektrowerkzeugmaschine zu verhindern, falls der Schalter sich in der Ein-Position befindet.

Somit kann ein ungewünschtes Anlaufen der Elektrowerkzeugmaschine sicher und zuverlässig verhindert werden, falls der Schalter sich bei Herstellung der elektrisch leitenden Verbindung zwischen der Elektrowerkzeugmaschine und der Energiequelle bereits bzw. noch in der Ein-Position befindet.

Gemäß einer Ausführungsform ist die Elektronikeinheit dazu ausgebildet, beim Trennen der elektrisch leitenden Verbindung zwischen der Elektrowerkzeugmaschine und der Energiequelle ein Wegfallen der von der Energiequelle bereitgestellten Betriebsspannung zu detektieren und ein Umschalten des Schalters von der Ein-Position in die Aus-Position zu bewirken.

Die Erfindung ermöglicht somit durch ein einfaches Umschalten des Schalters beim Trennen der elektrisch leitenden Verbindung zwischen der Elektrowerkzeugmaschine und der Energiequelle ein ungewünschtes Anlaufen der Elektrowerkzeugmaschine bei einer Wiederherstellung dieser elektrisch leitenden Verbindung wirksam zu verhindern.

Dem Schalter ist bevorzugt ein Rückstellglied zum Umschalten des Schalters von der Ein-Position in die Aus-Position zugeordnet und der Elektronikeinheit ist ein Halteglied zum Halten des Rückstellglieds zugeordnet. Die Elektronikeinheit ist vorzugsweise dazu ausgebildet, beim Wegfallen der von der Energiequelle bereitgestellten Betriebsspannung das Halteglied zum Freigeben des Rückstellglieds anzusteuern.

Somit kann eine wirksame und unkomplizierte Halte-/Rückstelleinheit realisiert werden.

Gemäß einer Ausführungsform weist die Elektronikeinheit diskrete Komponenten zur differentiellen Auswertung der von der Energiequelle bereitgestellten Betriebsspannung auf. Die diskreten Komponenten sind dazu ausgebildet, derart zusammenzuwirken, dass im eingeschwungenen Zustand Ruhestromfreiheit ermöglicht wird.

Die Erfindung ermöglicht somit durch die Verwendung einfacher und kostengünstiger Bauelemente eine ruhestromfreie Ausgestaltung der Elektronikeinheit.

Das Eingangs genannte Problem wird auch gelöst durch eine nicht beanspruchte Anlaufsperre mit einer Elektronikeinheit für eine Elektrowerkzeugmaschine, die mit einer zugeordneten Energiequelle elektrisch leitend verbindbar ist. Die Elektronikeinheit ist dazu ausgebildet, nach Herstellung einer elektrisch leitenden Verbindung zwischen der Elektrowerkzeugmaschine und der Energiequelle nur für einen begrenzten, vorgegebenen Zeitraum Energie von der Energiequelle aufzunehmen.

### Kurze Beschreibung der Zeichnungen

Die Erfindung ist anhand von in den Zeichnungen dargestellten Ausführungsbeispielen in der nachfolgenden Beschreibung näher erläutert. Es zeigen:
Fig. 1 ein vereinfachtes Schaltbild einer mit einer Energiequelle verbindbaren Elektrowerkzeugmaschine gemäß einer ersten Ausführungsform,
Fig. 2 ein vereinfachtes Schaltbild einer mit einer Energiequelle verbindbaren Elektrowerkzeugmaschine gemäß einer nicht beanspruchten zweiten Ausführungsform, und
Fig. 3 ein vereinfachtes Schaltbild einer mit einer Energiequelle verbindbaren Elektrowerkzeugmaschine gemäß einer nicht beanspruchten dritten Ausführungsform.

### Beschreibung der Ausführungsbeispiele

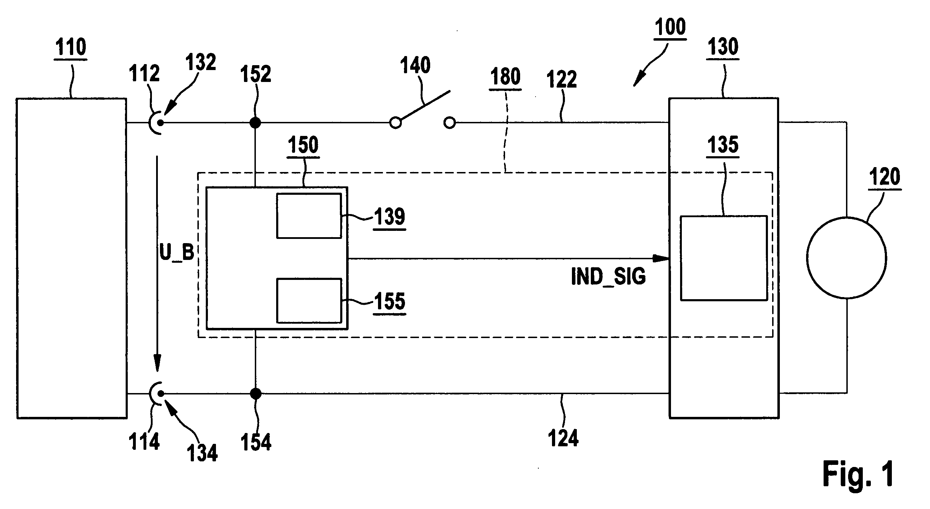

Fig. 1 zeigt schematisch eine mit einer Energiequelle 110 verbindbare Elektrowerkzeugmaschine 100 mit einer Antriebseinheit 120 und einer dieser zugeordneten Ansteuereinheit 130 gemäß einer ersten Ausführungsform. Die Elektrowerkzeugmaschine 100 weist beispielhaft mindestens zwei Anschlüsse 132,134 auf, die mit zugeordneten Anschlüssen 112, 114 der Energiequelle 110 mechanisch und elektrisch leitend verbindbar sind, zwischen denen eine Betriebsspannung U_B zum Betrieb der Maschine 100 bereitgestellt wird. Die Anschlüsse 132, 134 sind illustrativ über zugeordnete Leitungen 122 bzw. 124 mit der zur Ansteuerung der Antriebseinheit 120 ausgebildeten Ansteuereinheit 130 verbunden. In der Leitung 122 ist beispielhaft ein zum Ein- und Ausschalten der Elektrowerkzeugmaschine 100 vorgesehener und zwischen einer Ein- und einer Aus-Position umschaltbarer Schalter 140 angeordnet, der illustrativ in seiner Aus-Position gezeigt ist und nachfolgend auch als "Ein-/Aus-Schalter" bezeichnet wird.

Die Elektrowerkzeugmaschine 100 kann eine beliebige Werkzeugmaschine sein, bei der ein zugeordnetes Werkzeug mit der Antriebseinheit 120 antreibbar ist, z. B. eine Tischsäge, eine Kettensäge, eine Kreissäge, eine Bandschleifmaschine, eine Winkelschleifmaschine, eine Bohrmaschine, eine Schlagbohrmaschine, ein Bohrhammer, ein Schrauber, ein Bohrschrauber etc. Gemäß einer Ausführungsform ist die Elektrowerkzeugmaschine 100 ein handgeführtes Elektrowerkzeug und die Energiequelle 110 ist vorzugsweise ein Akkupack, das zur netzunabhängigen Stromversorgung mechanisch und elektrisch mit dem handgeführten Elektrowerkzeug verbindbar ist.

Die Antriebseinheit 120 ist beispielhaft ein mit Strom versorgter, elektrischer Antriebsmotor eines beliebigen Motortyps, z. B. ein elektronisch kommutierter Motor oder ein Gleichstrommotor. Dieser ist im Betrieb illustrativ mit der Ansteuereinheit 130 ansteuerbar, die dazu ausgebildet ist, einen im Betrieb des Motors 120 erforderlichen Energiefluss zum Motor 120 zu steuern. Hierbei ist der Antriebsmotor 120 vorzugsweise derart elektronisch steuer- bzw. regelbar, dass sowohl ein Reversierbetrieb, als auch Vorgaben hinsichtlich einer gewünschten Drehgeschwindigkeit realisierbar sind. Die Funktionsweise und der Aufbau eines geeigneten Antriebsmotors 120 sowie der zugeordneten Ansteuereinheit 130 sind aus dem Stand der Technik hinreichend bekannt, sodass hier zwecks Knappheit der Beschreibung auf eine eingehende Beschreibung verzichtet wird.

Gemäß einer Ausführungsform weist die Elektrowerkzeugmaschine 100 eine Elektronikeinheit 180 zur Realisierung einer Anlaufsperre auf, die zumindest teilweise mit einer aus diskreten Komponenten aufgebauten Schaltung 155 zur differentiellen Auswertung der von der Energiequelle 110 bereitgestellten Betriebsspannung U_B realisiert ist. Die Schaltung 155 und/oder die Erfassungseinheit 150 ist bevorzugt Ruhestromfrei ausgebildet, d.h. im eingeschwungenen Zustand der Schaltung 155 bzw. der Erfassungseinheit 150 fließt darin kein Ruhestrom. Ein geeigneter Aufbau der Schaltung 155 bzw. der Erfassungseinheit 150 ist von einem Fachmann problemlos realisierbar und nicht Gegenstand der vorliegenden Erfindung, sodass hier zwecks Knappheit der Beschreibung auf eine eingehende Beschreibung verzichtet wird. Es wird jedoch darauf hingewiesen, dass die Realisierung der Schaltung 155 mit diskreten Komponenten lediglich beispielhaften Charakter hat und nicht zur Einschränkung der Erfindung dient. Vielmehr kann auch ein anderer Aufbau der Schaltung 155 bzw. der Elektronikeinheit 180 Anwendung finden, z. B. ein Aufbau mit einer Kombination aus diskreten und integrierten Komponenten und/oder in der Form eines integrierten Bausteins.

Die Elektronikeinheit 180 ist bevorzugt dazu ausgebildet, bei der Herstellung einer elektrisch leitenden Verbindung zwischen der Elektrowerkzeugmaschine 100 und der Energiequelle 110 ein Anlaufen der Elektrowerkzeugmaschine 100 zu verhindern, falls der Ein-/Aus-Schalter 140 sich in der Ein-Position befindet. Hierbei nimmt die Elektronikeinheit 180 nur für einen begrenzten, vorgegebenen Zeitraum nach Herstellung der elektrisch leitenden Verbindung zwischen der Elektrowerkzeugmaschine 100 und der Energiequelle 110 Energie von der Energiequelle 110 auf, wie unten stehend beschrieben.

Illustrativ weist die Elektronikeinheit 180 eine Erfassungseinheit 150 und eine beispielhaft der Ansteuereinheit 130 zugeordnete Auswerteeinheit 135 auf. Darüber hinaus kann die Elektronikeinheit 180 ein beispielhaft der Erfassungseinheit 150 zugeordnetes, nicht-flüchtiges Speichermedium 139 aufweisen, das im Ruhezustand bevorzugt stromlos arbeitet. Es wird jedoch darauf hingewiesen, dass auch andere Ausgestaltungen möglich sind, die ebenfalls im Rahmen der vorliegenden Erfindung liegen. Z. B. kann das Speichermedium 139 der Ansteuereinheit 139 zugeordnet sein und/oder die Auswerteeinheit 135 kann ein separates Bauteil sein, das die Ansteuereinheit 130 zum Verhindern eines Anlaufens der Elektrowerkzeugmaschine 100 ansteuern kann. Darüber hinaus können die Elektronikeinheit 180 und die Ansteuereinheit 130 auch als eine einzelne elektronische Schaltung ausgebildet sein.

Die Erfassungseinheit 150 ist beispielhaft zwischen zwei den Leitungen 122, 124 zugeordneten Knotenpunkten 152 bzw. 154 angeordnet, wobei der Knotenpunkt 152 zwischen Anschluss 132 und Schalter 140 vorgesehen ist. Die Erfassungseinheit 150 ist dazu ausgebildet, bei der Herstellung der elektrisch leitenden Verbindung zwischen der Elektrowerkzeugmaschine 100 und der Energiequelle 110 eine Beaufschlagung der Elektrowerkzeugmaschine 100 mit der von der Energiequelle 110 bereitgestellten Betriebsspannung U_B zu detektieren. Bei einer entsprechenden Detektion gibt die Erfassungseinheit 150 bevorzugt ein temporäres, von der Auswerteeinheit 135 auswertbares Indikatorsignal IND_SIG aus, das die Beaufschlagung der Elektrowerkzeugmaschine 100 mit der Betriebsspannung U_B anzeigt. Das temporäre Indikatorsignal IND_SIG ist z. B. durch Erzeugen eines Spannungssignals, eines Stromsignals oder eines vorgegebenen Zustands in dem nichtflüchtigen Speichermedium 139 realisierbar, wie unten stehend beschrieben.

Die Auswerteeinheit 135 ist bevorzugt dazu ausgebildet, in Abhängigkeit von dem Indikatorsignal IND_SIG ein Anlaufen der Elektrowerkzeugmaschine 100 zu verhindern, falls der Ein-/Aus-Schalter 140 sich in der Ein-Position befindet. Hierzu kann die Auswerteeinheit 135 gemäß einer Ausführungsform z. B. das Indikatorsignal IND_SIG aus dem nicht-flüchtigen Speichermedium 139 auslesen, wie unten stehend beschrieben.

Im Betrieb der Elektrowerkzeugmaschine 100 wird durch eine elektrische und mechanische Verbindung der Anschlüsse 132, 134 mit den Anschlüssen 112 bzw. 114, z. B. durch Einschieben eines zugeordneten Akkupacks, insbesondere eines geeigneten Wechselakkupacks, in eine hierzu an der Maschine 100 vorgesehene Wechselaufnahme, eine elektrisch leitende Verbindung zwischen der Elektrowerkzeugmaschine 100 und der Energiequelle 110 hergestellt. Über diese elektrisch leitende Verbindung wird die Maschine 100 mit der von der Energiequelle 110 bereitgestellten Betriebsspannung U_B beaufschlagt, sodass in der Erfassungseinheit 150 ein Strom fließen kann, der eine Detektion der Beaufschlagung ermöglicht. Hierbei ist die Erfassungseinheit 150 jedoch derart ausgebildet, dass dieser Strom nur für einen begrenzten, vorgegebenen Zeitraum T1 fließt und die Erfassungseinheit 150 somit nur im Zeitraum T1 Energie von dem Wechselakkupack aufnimmt. Der Zeitraum T1 ist bevorzugt derart bemessen, dass der zugeordnete Stromfluss nicht zu einer Entladung oder einer Tiefentladung des Wechselakkupacks führen kann, auch nicht bei wiederholter Ausführung des oben beschriebenen Vorgangs, insbesondere dann, wenn sich der Ein-/Aus-Schalter 140 in der Aus-Position befindet.

In Reaktion auf die Detektion der Beaufschlagung der Elektrowerkzeugmaschine 100 mit der Betriebsspannung U_B erzeugt die Erfassungseinheit 150 das oben beschriebene, temporäre Indikatorsignal IND_SIG. Gemäß einer Ausführungsform ist das temporäre Indikatorsignal IND_SIG ein Spannungs- oder ein Stromsignal, das während eines begrenzten vorgegebenen Zeitraums T2 ausgegeben wird, wobei der Zeitraum T2 und der Zeitraum T1 unterschiedliche Längen aufweisen können. Die Existenz dieses Spannungs- oder Stromsignals dient als Indikator für die Beauschlagung der Elektrowerkzeugmaschine 100 mit der Betriebsspannung U_B, bzw. als Beleg dafür, dass die Erfassungseinheit 150 einen Übergang vom spannungsfreien in einen spannungsbeaufschlagten Zustand detektiert hat. Diese Detektion erfolgt bevorzugt durch Detektion eines durch Anlegen der Betriebsspannung U_B entstehenden Spannungssprungs bzw. einer Spannungsrampe. Hierbei kann der spannungsfreie Zustand auch ein Zustand sein, bei dem die von der Erfassungseinheit 150 detektierbare Spannung einen ersten Schwellenwert unterschreitet, während der spannungsbeaufschlagte Zustand auch ein Zustand sein kann, bei dem die von der Erfassungseinheit 150 detektierbare Spannung einen zweiten Schwellenwert überschreitet.

Alternativ zur Erzeugung eines Spannungs- oder Stromsignals als Indikatorsignal IND_SIG kann wie oben beschrieben ein vorgegebener Zustand für den Zeitraum T2 in dem nicht-flüchtigen Speichermedium 139 erzeugt werden. Hierbei kann als Speichermedium 139 z. B. ein bistabiles Relais Anwendung finden, bei dem einer der beiden möglichen Zustände für den Zeitraum T2 gesetzt wird. Alternativ kann beispielsweise ein EEPROM Anwendung finden, bei dem z. B. ein entsprechendes Bit an einer vorgegebenen Speicherstelle für den Zeitraum T2 gesetzt wird.

Die Auswerteeinheit 135 bestimmt nun gemäß einer Ausführungsform einen momentanen Zustand der Elektrowerkzeugmaschine 100 auf der Basis des temporären Indikatorsignals IND_SIG und einer aktuellen Schalterstellung des Ein-/Aus-Schalters 140. Hierbei erfolgt die Bestimmung des momentanen Zustands bevorzugt an einem Zeitpunkt, an dem ein stabiles Anliegen eines aktuellen Indikatorsignals IND_SIG gewährleistet werden kann, wobei die Auswerteeinheit 135 ein Anlaufen der Elektrowerkzeugmaschine 100 bis zu einem vorgegebenen Zeitpunkt nach dieser Bestimmung verhindert. Somit kann verhindert werden, dass die Elektrowerkzeugmaschine 100 anläuft bevor eine zuverlässige Auswertung durch die Auswerteeinheit 135 erfolgt ist.

Für den Fall, dass die Auswerteeinheit 135 im Zeitraum T2 auf der Basis des Indikatorsignals IND_SIG eine Beaufschlagung des Elektrowerkzeugs 100 mit der von der Energiequelle 110 bereitgestellten Betriebsspannung U_B bestimmt, d. h. dass entweder ein entsprechendes Spannungs- oder Stromsignal an der Auswerteeinheit 135 anliegt oder ein entsprechendes Bit aus dem nicht-flüchtigen Speichermedium 139 auslesbar ist, verhindert die Auswerteeinheit 135 z. B. durch eine geeignete Ansteuerung der Ansteuereinheit 130 ein Anlaufen des Antriebsmotors 120, falls der Schalter 140 in der Ein-Position ist. Falls der Schalter 140 in der Aus-Position ist, ist ein Sperren eines Anlaufens des Antriebsmotors 120 durch die Auswerteeinheit 135 nicht erforderlich.

Für den Fall, dass die Auswerteeinheit 135 keine Beaufschlagung des Elektrowerkzeugs 100 mit der von der Energiequelle 110 bereitgestellten Betriebsspannung U_B bestimmt, ist ein Sperren eines Anlaufens des Antriebsmotors 120 durch die Auswerteeinheit 135 ebenfalls nicht erforderlich. Somit kann die Elektrowerkzeugmaschine 100 bevorzugt ohne eine Intervention der Auswerteeinheit 135 in Abhängigkeit von der aktuellen Schalterstellung des Ein-/Aus-Schalters 140 anlaufen, oder nicht.

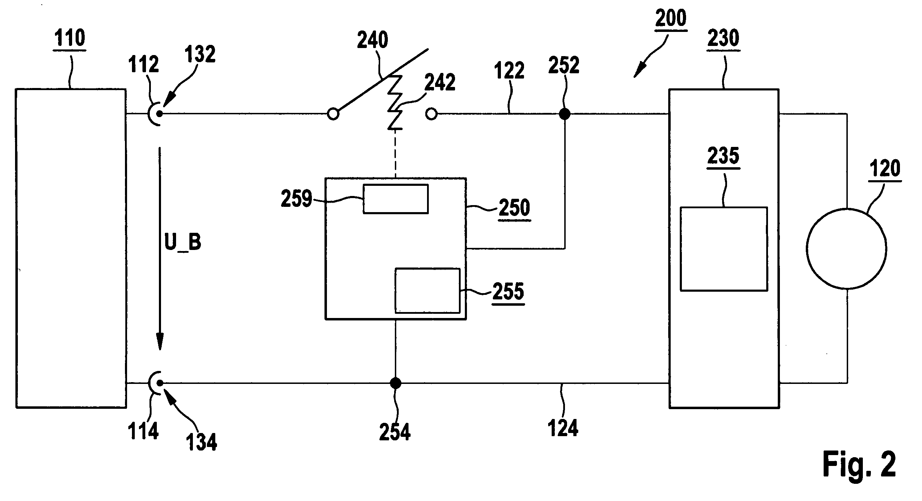

Fig. 2 zeigt schematisch eine mit der Energiequelle 110 von Fig. 1 verbindbare Elektrowerkzeugmaschine 200 mit der Antriebseinheit 120 von Fig. 1 und einer dieser zugeordneten Ansteuereinheit 230 gemäß einer zweiten Ausführungsform, die nicht Teil der Erfindung ist. Die Elektrowerkzeugmaschine 200 kann wie die Elektrowerkzeugmaschine 100 von Fig. 1 eine beliebige Werkzeugmaschine sein, bei der ein zugeordnetes Werkzeug mit der Antriebseinheit 120 antreibbar ist. Die der Antriebseinheit 120 zugeordnete Ansteuereinheit 230 kann bis auf die Auswerteeinheit 135 von Fig. 1 wie die Ansteuereinheit 130 von Fig. 1 aufgebaut sein. Gemäß einer Ausführungsform ist die Ansteuereinheit 230 wie eine gebräuchliche, dem Fachmann bekannte Ansteuereinheit ausgebildet und z. B. mit einer aus dem Stand der Technik bekannten Wiederanlaufsperre 235 versehen. Diese kann auch in der Ansteuereinheit 130 von Fig. 1 vorgesehen sein.

Die Elektrowerkzeugmaschine 200 hat wie die Werkzeugmaschine 100 von Fig. 1 die Leitungen 122, 124 mit den beiden Anschlüssen 132 bzw. 134, die mit den zugeordneten Anschlüssen 112 bzw. 114 der Energiequelle 110 mechanisch und elektrisch leitend verbindbar sind. In der Leitung 122 ist beispielhaft ein zum Ein- und Ausschalten der Elektrowerkzeugmaschine 100 vorgesehener und zwischen einer Ein- und einer Aus-Position umschaltbarer Schalter 240 angeordnet, der illustrativ in seiner Aus-Position gezeigt ist und nachfolgend auch als "Ein-/Aus-Schalter" bezeichnet wird.

Der Ein-/Aus-Schalter 240 steht gemäß einer Ausführungsform in einer Wirkverbindung mit einer Elektronikeinheit 250, die beispielhaft zwischen zwei den Leitungen 122, 124 zugeordneten Knotenpunkten 252 bzw. 254 angeordnet ist, wobei der Knotenpunkt 252 zwischen Schalter 240 und Ansteuereinheit 230 vorgesehen ist. Dieser Elektronikeinheit 250 ist beispielhaft ein Halteglied 259 zugeordnet, das im Wirkeingriff mit einem dem Ein-/Aus-Schalter 240 zugeordneten Rückstellglied 242 steht. Das Rückstellglied 242 ist dazu ausgebildet, eine Rückstellkraft auf den Ein-/Aus-Schalter 240 auszuüben, um diesen von der Ein- in die Aus-Position zu bewegen. Eine hierzu erforderliche Rückstellenergie ist z. B. als elektrische Energie in dem Rückstellglied 242 speicherbar. Es wird jedoch darauf hingewiesen, dass auch andere Energieformen Anwendung finden können. Z. B. kann das Rückstellglied 242 eine Druckfeder aufweisen, in der die Rückstellenergie in der Form von mechanischer Energie speicherbar ist.

Die Elektronikeinheit 250 ist zumindest teilweise mit einer aus diskreten Komponenten aufgebauten Schaltung 255 zur Auswertung der von der Energiequelle 110 bereitgestellten Betriebsspannung U_B realisiert und dazu ausgebildet, eine Anlaufsperre für die Elektrowerkzeugmaschine 200 zu realisieren. Die Schaltung 255 ist wie die Schaltung 155 von Fig. 1 bevorzugt Ruhestromfrei ausgebildet, d.h. im eingeschwungenen Zustand der Schaltung 255 fließt darin kein Ruhestrom. Ein geeigneter Aufbau der Schaltung 255 ist von einem Fachmann problemlos realisierbar und nicht Gegenstand der vorliegenden Erfindung, sodass hier zwecks Knappheit der Beschreibung auf eine eingehende Beschreibung verzichtet wird. Es wird jedoch darauf hingewiesen, dass die Realisierung der Schaltung 255 mit diskreten Komponenten lediglich beispielhaften Charakter hat und nicht zur Einschränkung der Erfindung dient. Vielmehr kann auch ein anderer Aufbau der Schaltung 255 bzw. der Elektronikeinheit 250 Anwendung finden, z. B. ein Aufbau mit einer Kombination aus diskreten und integrierten Komponenten und/oder in der Form eines integrierten Bausteins.

Im Betrieb der Elektrowerkzeugmaschine 200 wird durch eine elektrische und mechanische Verbindung der Anschlüsse 132,134 mit den Anschlüssen 112 bzw. 114, z. B. durch Einschieben eines zugeordneten Akkupacks, insbesondere eines geeigneten Wechselakkupacks, in eine hierzu an der Maschine 200 vorgesehene Wechselaufnahme, eine elektrisch leitende Verbindung zwischen der Elektrowerkzeugmaschine 200 und der Energiequelle 110 hergestellt. Über diese elektrisch leitende Verbindung wird die Maschine 200 mit der von der Energiequelle 110 bereitgestellten Betriebsspannung U_B beaufschlagt.

Wird nun der Ein-/Aus-Schalter 240 durch eine erste Betätigung z. B. in die Ein-Position bewegt, kann in der Elektronikeinheit 250 ein Strom fließen, der eine Detektion der Beaufschlagung der Elektrowerkzeugmaschine 200 mit der von der Energiequelle 110 bereitgestellten Betriebsspannung U_B ermöglicht. In Reaktion auf die Detektion der Beaufschlagung der Elektrowerkzeugmaschine 200 mit der Betriebsspannung U_B wird das Halteglied 259 aktiviert, das daraufhin den Ein-/Aus-Schalter 240 gegen die von dem Rückstellglied 242 ausgeübte Rückstellkraft in der Ein-Position hält. Hierbei wird eine Selbsthaltung des Ein-/Aus-Schalters 240 bewirkt, die bevorzugt solange aufrechterhalten wird, bis der Ein-/Aus-Schalter 240 durch eine erneute Betätigung in sein Aus-Position bewegt wird oder die zwischen der Elektrowerkzeugmaschine 200 und der Energiequelle 110 hergestellte, elektrisch leitende Verbindung getrennt wird.

Gemäß einer Ausführungsform ist die Elektronikeinheit 250 dazu ausgebildet, beim Trennen der elektrisch leitenden Verbindung zwischen der Elektrowerkzeugmaschine 200 und der Energiequelle 110 ein Wegfallen der von der Energiequelle 110 bereitgestellten Betriebsspannung U_B zu detektieren und ein Umschalten des Schalters 240 von der Ein-Position in die Aus-Position zu bewirken. Hierzu steuert die Elektronikeinheit 250 beim Wegfallen der von der Energiequelle 110 bereitgestellten Betriebsspannung U_B das Halteglied 259 zum Freigeben des Rückstellglieds 242 an. Das freigegebene Rückstellglied 242 bewegt nun aufgrund seiner Rückstellkraft den Ein-/Aus-Schalter 240 in die Aus-Position. Wenn der Ein-/Aus-Schalter 240 sich in der Aus-Position befindet, kann in der Elektronikeinheit 250 durch deren Anordnung zwischen den Knotenpunkten 252 und 254 kein Strom mehr fließen.

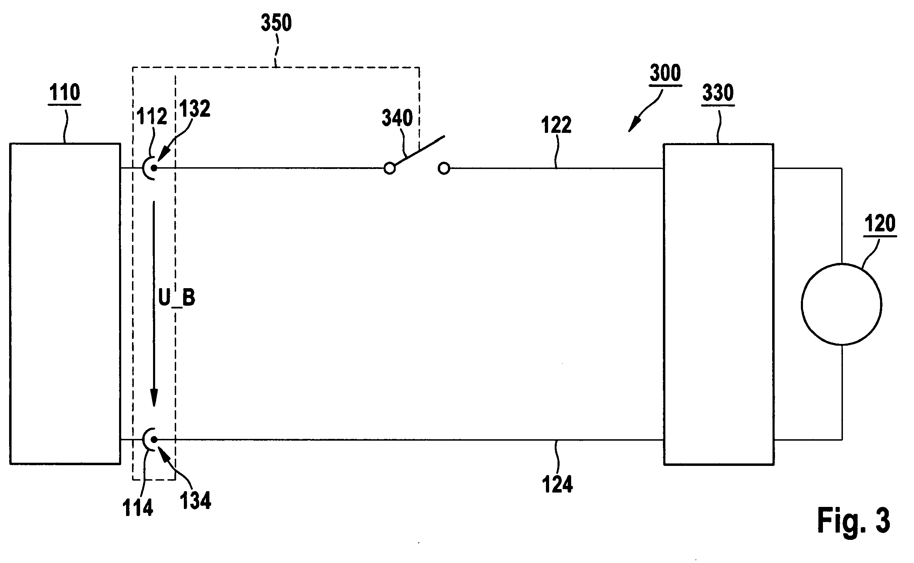

Fig. 3 zeigt schematisch eine mit der Energiequelle 110 von Fig. 1 verbindbare Elektrowerkzeugmaschine 300 mit der Antriebseinheit 120 von Fig. 1 und einer dieser zugeordneten Ansteuereinheit 330 gemäß einer dritten Ausführungsform, die nicht Teil der Erfindung ist. Die Elektrowerkzeugmaschine 300 kann eine beliebige, mit einem Wechselakkupack betreibbare Werkzeugmaschine sein, bei der ein zugeordnetes Werkzeug mit der Antriebseinheit 120 antreibbar ist. Entsprechende Beispiele sind oben bei Fig. 1 beschrieben. Die der Antriebseinheit 120 zugeordnete Ansteuereinheit 330 kann wie die Ansteuereinheit 230 von Fig. 2 aufgebaut sein.

Die Elektrowerkzeugmaschine 300 hat wie die Werkzeugmaschine 100 von Fig. 1 die Leitungen 122, 124 mit den beiden Anschlüssen 132 bzw. 134, die mit den zugeordneten Anschlüssen 112 bzw. 114 der Energiequelle 110 mechanisch und elektrisch leitend verbindbar sind. In der Leitung 122 ist beispielhaft ein zum Ein- und Ausschalten der Elektrowerkzeugmaschine 300 vorgesehener und zwischen einer Ein- und einer Aus-Position umschaltbarer Schalter 340 angeordnet, der il-lustrativ in seiner Aus-Position gezeigt ist und nachfolgend auch als "Ein-/Aus-Schalter" bezeichnet wird.

Gemäß einer Ausführungsform ist an der Elektrowerkzeugmaschine 300 eine dem Ein-/Aus-Schalter 340 zugeordnete, mechanische Kopplung 350 vorgesehen. Diese ist dazu ausgebildet, bei einer Herstellung einer elektrisch leitenden Verbindung zwischen der Elektrowerkzeugmaschine 300 und einem die Energiequelle 110 ausbildenden Wechselakkupack den Ein-/Aus-Schalter 340 in die Aus-Position zu bewegen. Des Weiteren ist die mechanische Kopplung 350 vorzugsweise dazu ausgebildet, ein Einschieben des Wechselakkupacks in eine hierzu an der Elektrowerkzeugmaschine 300 vorgesehene Wechselaufnahme zu verhindern, falls der Ein-/Aus-Schalter 340 sich in der Ein-Position befindet. Darüber hinaus ist die mechanische Kopplung 350 bevorzugt auch dazu ausgebildet, beim Trennen der elektrisch leitenden Verbindung zwischen der Elektrowerkzeugmaschine 300 und dem Wechselakkupack den Ein-/Aus-Schalter 340 in die Aus-Position zu bewegen.

## Patentansprüche

1. Elektrowerkzeugmaschine (100) mit einer Elektronikeinheit (180) zur Realisierung einer Anlaufsperre, wobei die Elektrowerkzeugmaschine (100) mit einer zugeordneten Energiequelle (110) elektrisch leitend verbindbar ist, **dadurch gekennzeichnet, dass** die Elektronikeinheit (180) zur Detektion einer Beaufschlagung der Elektrowerkzeugmaschine (100) mit einer von der Energiequelle (110) nach Herstellung einer elektrisch leitenden Verbindung zwischen der Elektrowerkzeugmaschine (100) und der Energiequelle (110) bereitgestellten Betriebsspannung (U_B) ausgebildet ist, wobei die Elektronikeinheit (180) nur für einen zur Detektion erforderlichen, begrenzten vorgegebenen Zeitraum Energie von der Energiequelle (110) aufnimmt.

2. Elektrowerkzeugmaschine nach Anspruch 1, mit einem zwischen einer Ein- und einer Aus-Position umschaltbaren Schalter (140) zum Ein- und Ausschalten der Elektrowerkzeugmaschine (100), **dadurch gekennzeichnet, dass** die Elektronikeinheit (180) dazu ausgebildet ist, bei der Herstellung der elektrisch leitenden Verbindung zwischen der Elektrowerkzeugmaschine (100) und der Energiequelle (110) ein Anlaufen der Elektrowerkzeugmaschine (100) zu verhindern, falls der Schalter (140) sich in der Ein-Position befindet.

3. Elektrowerkzeugmaschine nach Anspruch 2, **dadurch gekennzeichnet, dass** die Elektronikeinheit (180) eine Erfassungseinheit (150) aufweist, die dazu ausgebildet ist, bei der Herstellung der elektrisch leitenden Verbindung zwischen der Elektrowerkzeugmaschine (100) und der Energiequelle (110) eine Beaufschlagung der Elektrowerkzeugmaschine (100) mit einer von der Energiequelle (110) bereitgestellten Betriebsspannung (U_B) zu detektieren.

4. Elektrowerkzeugmaschine nach Anspruch 3, **dadurch gekennzeichnet, dass** die Erfassungseinheit (150) dazu ausgebildet ist bei der Beaufschlagung der Elektrowerkzeugmaschine (100) mit der von der Energiequelle (110) bereitgestellten Betriebsspannung (U_B) ein temporäres Indikatorsignal (IND_SIG) auszugeben, das die Beaufschlagung der Elektrowerkzeugmaschine (100) mit der Betriebsspannung (U_B) anzeigt.

5. Elektrowerkzeugmaschine nach Anspruch 4, **dadurch gekennzeichnet, dass** das temporäre Indikatorsignal (IND_SIG) durch Erzeugen eines Spannungssignals, eines Stromsignals oder eines vorgegebenen Zustands in einem nichtflüchtigen Speichermedium (139) realisierbar ist.

6. Elektrowerkzeugmaschine nach Anspruch 4 oder 5, **dadurch gekennzeichnet, dass** die Elektronikeinheit (180) eine Auswerteeinhelt (135) aufweist, die dazu ausgebildet ist, in Abhängigkeit von dem Indikatorsignal (IND_SIG) ein Anlaufen der Elektrowerkzeugmaschine (100) zu verhindern, falls der Schalter (140) sich in der Ein-Position befindet.

7. Elektrowerkzeugmaschine nach Anspruch 3, **dadurch gekennzeichnet, dass** die Elektronikeinheit (250) dazu ausgebildet ist, beim Trennen der elektrisch leitenden Verbindung zwischen der Elektrowerkzeugmaschine (200) und der Energiequelle (110) ein Wegfallen der von der Energiequelle (110) bereitgestellten Betriebsspannung (U_B) zu detektieren und ein Umschalten des Schalters (240) von der Ein-Position in die Aus-Position zu bewirken.

8. Elektrowerkzeugmaschine nach Anspruch 7, **dadurch gekennzeichnet, dass** dem Schalter (240) ein Rückstellglied (242) zum Umschalten des Schalters (240) von der Ein-Position in die Aus-Position zugeordnet ist und der Elektronikeinheit (250) ein Halteglied (259) zum Halten des Rückstellglieds (242) zugeordnet ist, wobei die Elektronikeinheit (250) dazu ausgebildet ist, beim Wegfallen der von der Energiequelle (110) bereitgestellten Betriebsspannung (U_B) das Halteglied (259) zum Freigeben des Rückstellglieds (242) anzusteuern.

9. Elektrowerkzeugmaschine nach einem der Ansprüche 3 bis 8, **dadurch gekennzeichnet, dass** die Elektronikeinheit (180) diskrete Komponenten (155) zur differentiellen Auswertung der von der Energiequelle (110) bereitgestellten Betriebsspannung (U_B) aufweist, wobei die diskreten Komponenten (155) dazu ausgebildet sind, derart zusammenzuwirken, dass im eingeschwungenen Zustand Ruhestromfreiheit ermöglicht wird.

## Claims

1. Electric machine tool (100) comprising an electronics unit (180) for realizing a starting inhibitor, wherein the electric machine tool (100) is electrically conductively connectable to an assigned energy source (110), **characterized in that** the electronics unit (180) is designed for detecting application to the electric machine tool (100) of an operating voltage (U_B) provided by the energy source (110) after the production of an electrically conductive connection between the electric machine tool (100) and the energy source (110), wherein the electronics unit (180) takes up energy from the energy source (110) only for a limited predefined period of time required for the detection.

2. Electric machine tool according to Claim 1, comprising a switch (140) for switching the electric machine tool (100) on and off, said switch being switchable between an on position and an off position, **characterized in that** the electronics unit (180) is designed, upon the production of the electrically conductive connection between the electric machine tool (100) and the energy source (110), to prevent the electric machine tool (100) from starting if the switch (140) is in the on position.

3. Electric machine tool according to Claim 2, **characterized in that** the electronics unit (180) has a detection unit (150), which is designed, upon the production of the electrically conductive connection between the electric machine tool (100) and the energy source (110), to detect application to the electric machine tool (100) of an operating voltage (U_B) provided by the energy source (110).

4. Electric machine tool according to Claim 3, **characterized in that** the detection unit (150) is designed, upon application to the electric machine tool (100) of the operating voltage (U_B) provided by the energy source (110), to output a temporary indicator signal (IND_SIG) indicating the application of the operating voltage (U_B) to the electric machine tool (100).

5. Electric machine tool according to Claim 4, **characterized in that** the temporary indicator signal (IND_SIG) is realizable by the generation of a voltage signal, of a current signal or of a predefined state in a non-volatile memory medium (139).

6. Electric machine tool according to Claim 4 or 5, **characterized in that** the electronics unit (180) has an evaluation unit (135), which is designed, depending on the indicator signal (IND_SIG), to prevent the electric machine tool (100) from starting if the switch (140) is in the on position.

7. Electric machine tool according to Claim 3, **characterized in that** the electronics unit (250) is designed, upon disconnection of the electrically conductive connection between the electric machine tool (200) and the energy source (110), to detect a loss of the operating voltage (U_B) provided by the energy source (110) and to cause the switch (240) to be switched from the on position to the off position.

8. Electric machine tool according to Claim 7, **characterized in that** the switch (240) is assigned a restoring element (242) for switching the switch (240) from the on position to the off position, and the electronics unit (250) is assigned a holding element (259) for holding the restoring element (242), wherein the electronics unit (250) is designed, upon loss of the operating voltage (U_B) provided by the energy source (110), to drive the holding element (259) for releasing the restoring element (242).

9. Electric machine tool according to any of Claims 3 to 8, **characterized in that** the electronics unit (180) has discrete components (155) for the differential evaluation of the operating voltage (U_B) provided by the energy source (110), wherein the discrete components (155) are designed to interact in such a way that freedom from quiescent current is made possible in the steady state.

## Revendications

1. Machine-outil électrique (100) comprenant une unité électronique (180) pour la réalisation d'un verrouillage du démarrage, dans lequel la machine-outil électrique (100) peut être reliée de manière électriquement conductrice à une source d'énergie associée (110), **caractérisée en ce que** l'unité électronique (180) est conçue pour détecter une application à la machine-outil électrique (100) d'une tension de fonctionnement (U_B) fournie par la source d'énergie (110) après l'établissement d'une liaison électriquement conductrice entre la machine-outil électrique (100) et la source d'énergie (110), dans laquelle l'unité électronique (180) n'absorbe de l'énergie de la source d'énergie (110) que pendant une période limitée prédéterminée nécessaire pour la détection.

2. Machine-outil électrique selon la revendication 1, comportant un commutateur (140) pouvant être commuté entre une position fermée et une position ouverte pour activer et désactiver la machine-outil électrique (100), caractérisée en en ce que l'unité électronique (180) est conçue pour empêcher un démarrage de la machine-outil électrique (100) lors de l'établissement de la liaison électriquement conductrice entre la machine-outil électrique (100) et la source d'énergie (110), dans le cas où le commutateur (140) se trouve à la position fermée.

3. Machine-outil électrique selon la revendication 2, caractérisée en en ce que l'unité électronique (180) comprend une unité de détection (150) qui est conçue pour détecter une application à la machine-outil électrique (100) d'une tension de fonctionnement (U_B) fournie par la source d'énergie (110) lors de l'établissement de la liaison électriquement conductrice entre la machine-outil électrique (100) et la source d'énergie (110).

4. Machine-outil électrique selon la revendication 3, caractérisée en en ce que l'unité de détection (150) est conçue pour délivrer un signal indicateur temporaire (IND_SIG) qui indique l'application à la machine-outil électrique (100) de la tension de fonctionnement (U_B) lors de l'application à la machine-outil électrique (100) de la tension de fonctionnement (U_B) fournie par la source d'énergie (110).

5. Machine-outil électrique selon la revendication 4, caractérisée en en ce que le signal indicateur temporaire (IND_SIG) peut être réalisé en générant un signal de tension, un signal de courant ou un état prédéterminé dans un support de mémoire non volatil (139).

6. Machine-outil électrique selon la revendication 4 ou 5, caractérisée en en ce que l'unité électronique (180) comprend une unité d'évaluation (135) qui est conçue pour empêcher un démarrage de la machine-outil électrique (100) en fonction du signal indicateur (IND_SIG) dans le cas où le commutateur (140) se trouve en position fermée.

7. Machine-outil électrique selon la revendication 3, caractérisée en en ce que l'unité électronique (250) est conçue pour détecter une suppression de la tension de fonctionnement (U_B) fournie par la source d'énergie (110) lors de l'interruption de la liaison électriquement conductrice entre la machine-outil électrique (200) et la source d'énergie (110) et pour provoquer une commutation du commutateur (240) de la position fermée à la position ouverte.

8. Machine-outil électrique selon la revendication 7, caractérisée en en ce qu'un élément de réinitialisation (242) destiné à la commutation du commutateur (240) de la position fermée à la position ouverte est associé au commutateur (240) et en ce qu'un élément de maintien (259) destiné à maintenir l'élément de réinitialisation (242) est associé à l'unité électronique (250), dans laquelle l'unité électronique (250) est conçue pour commander le circuit de maintien (259) afin d'activer l'élément de réinitialisation (242) lors de la suppression de la tension de fonctionnement (U_B) fournie par la source d'énergie (110).

9. Machine-outil électrique selon l'une quelconque des revendications 3 à 8, **caractérisée en ce que** l'unité électronique (180) comprend des composants discrets (155) destinés à évaluer de manière différentielle la tension de fonctionnement (U_B) fournie par la source d'énergie (110), dans laquelle les composants discrets (155) sont conçus pour coopérer les uns avec les autres de manière à permettre le passage d'un courant de repos à l'état stable.
